# EUROPÄISCHE PATENTSCHRIFT

(11) **EP 1 015 864 B1**
(45) Veröffentlichungstag und Bekanntmachung des Hinweises auf die Patenterteilung: **28.11.2001**
(21) Anmeldenummer: 98948846.5
(22) Anmeldetag: 19.08.1998
(51) Int. Cl.: G01M 3/36

(54) **VERFAHREN UND VORRICHTUNG ZUR DICHTHEITSPRÜFUNG VON BEHÄLTERN**
PROCESS AND DEVICE FOR CHECKING THE TIGHTNESS OF CONTAINERS
PROCEDE ET DISPOSITIF POUR CONTROLER L'ETANCHEITE DE CONTENANTS

(30) Priorität: 19.09.1997 DE 19741488
(43) Veröffentlichungstag der Anmeldung: 05.07.2000
(73) Patentinhaber: Stratec Control Systems GmbH, 75172 Pforzheim (DE)
(72) Erfinder: SCHUBERT, Volkmar, Harald, D-76137 Karlsruhe (DE)
(74) Vertreter: Pfiz, Thomas, Dr.
(86) Internationale Anmeldenummer: EP9805269
(87) Internationale Veröffentlichungsnummer: WO9915871

(56) Entgegenhaltungen:
- EP-A- 0 230 367
- GB-A- 2 178 858
- GB-A- 2 196 130
- US-A- 5 230 239
- US-A- 5 528 925

## Beschreibung

Die Erfindung betrifft ein Verfahren und eine Vorrichtung zur Dichtheitsprüfung von in einer Förderstrecke im Durchlauf durch eine Prüfstation transportierten, unter Gasdruck stehenden verformbaren Behältern.

Verfahren und Vorrichtungen dieser Art kommen vor allem im Bereich automatisch arbeitender Abfüllanlagen, in denen Flaschen aus Kunststoff, insbesondere PET-Flaschen mit kohlensäurehaltigen Getränken befüllt werden, zum Einsatz. Dort tritt das Problem auf, die Dichtheit der Flaschen nach dem Befüllen und Verschließen in der Förderanlage zu überprüfen. Bekannt ist hierzu ein Verfahren, bei dem die Flaschen in einem Ultraschallbad mit Ultraschall beaufschlagt werden, wobei Kohlendioxid aus dem Füllgut ausgetrieben wird, was im Falle einer undichten Flasche zum Aufschäumen und Auslaufen von Flüssigkeit führt. Solche fehlerhaften Flaschen können dann über eine nachfolgende Füllstandsmessung erkannt und aus der Förderstrecke ausgeleitet werden. Hierbei wird neben der aufwendigen Handhabung vor allem als nachteilig angesehen, daß die Flaschen durch das Ultraschallbad und gegebenenfalls durch die austretende Flüssigkeit verschmutzt werden. Dieses Verfahren läßt sich auch nicht unabhängig vom Füllgut bei unter Gasdruck stehenden Behältern, insbesondere unter Druck befüllten Behältern, anwenden.

Ausgehend hiervon liegt der Erfindung die Aufgabe zugrunde, ein Verfahren und eine Vorrichtung der eingangs genannten Art dahingehend zu verbessern, daß die Dichtheit der Behälter mit einfachen Mitteln und insbesondere im Zuge des Behältertransports weitgehend unabhängig von der Transportgeschwindigkeit, dem Abstand und den Formtoleranzen der Behälter zuverlässig feststellbar ist.

Zur Lösung dieser Aufgabe werden die in den unabhängigen Patentansprüchen 1 und 8 angegebenen Merkmalskombinationen vorgeschlagen. Weitere vorteilhafte Ausgestaltungen und Weiterbildungen der Erfindung ergeben sich aus den abhängigen Ansprüchen.

Der erfindungsgemäßen Lösung liegt der Gedanke zugrunde, daß bei verformbaren Behältern die Formsteifigkeit mit dem Gasinnendruck unabhängig vom Füllstand zunimmt, so daß bei einer Verformung der Behälter über die Reaktionskraft der Behälterwandung der Gasdruck mittelbar erfaßt und bei fehlendem Gasdruck ein Behälter als undicht erkannt werden kann. Demgemäß wird nach der Erfindung vorgeschlagen, daß ein Tastorgan in einer Tastbewegung gegen eine Wandung der Behälter gedrückt wird, und daß die Reaktionskraft der Wandung des bei der Tastbewegung verformten Behälters als Maß für den Gasdruck erfaßt wird. Der Gasdruck kann dann im Sinne einer Fehlererkennung ausgewertet werden.

Eine bevorzugte Lösungsvariante sieht hierbei vor, daß ein Tastorgan durch Vorschub einer Abtasteinheit in einer linearen Tastbewegung gegen eine Wandung eines zu prüfenden Behälters gedrückt wird, wobei das Tastorgan über eine Druckfeder an der Abtasteinheit abgestützt ist und der Behälter bei der Tastbewegung verformt wird. Da die Positionsänderung von der Längenänderung der Druckfeder und damit von der Reaktionskraft der Wandung abhängt, wird über die Positionsänderung des Tastorgans bei der Tastbewegung der Gasdruck mittelbar erfaßt.

Bei gegebenem Vorschub der Abtasteinheit gegen den zu prüfenden Behälter kann die Positionsänderung des Tastorgans auf einfache Weise durch eine vorzugsweise berührungslose Weg- oder Abstandsmessung am Ende der Tastbewegung erfaßt werden.

Um Meßfehler aufgrund unterschiedlicher Behälterpositionen oder Formtoleranzen auszuschließen, kann das Tastorgan mit seinem freien Tastende vor dem Ausführen der Tastbewegung in einer Zustellbewegung der Abtasteinheit mit der Wandung des zu prüfenden Behälters in Anlage gebracht werden. In dieser Hinsicht ist es auch von Vorteil, wenn die Positionsänderung des Tastorgans durch eine Differenzmessung des Abstandes des Tastorgans zu einer ortsfesten Meßstelle am Anfang und Ende der Tastbewegung erfaßt wird.

Gemäß einer weiteren vorteilhaften Ausgestaltung der Erfindung wird die Abtasteinheit beim Abtastvorgang in der Transportgeschwindigkeit der zu prüfenden Behälter längs der Förderstrecke bewegt. Durch diese Maßnahme wird ein ungehinderter Förderfluß gewährleistet, wobei es besonders günstig ist, wenn die Tastbewegung quer zur Transportrichtung des zu prüfenden Behälters ausgeführt wird.

Um definierte Prüfbedingungen zu schaffen, wird der zu prüfende Behälter vorteilhafterweise an seiner von dem Tastorgan abgewandten Seite in Anlage an eine vorzugsweise mit dem Behälter mitbewegte Widerlagerfläche gebracht wird.

Des weiteren ist es von Vorteil, wenn eine Vielzahl von Abtasteinheiten im Umlauf längs eines Abschnitts der Förderstrekke in Fördergeschwindigkeit mitbewegt werden, und wenn der Vorschub der Abtasteinheiten quer zur Förderrichtung an einer Auslösestelle des Förderstreckenabschnitts unabhängig von dem Vorhandensein eines zu prüfenden Behälters ausgelöst wird. Durch diese Maßnahme wird eine Abtastung der Behälter ohne vorherige Positionsbestimmung ermöglicht.

Zur Lösung der eingangs genannten Aufgabe wird eine Vorrichtung vorgeschlagen, bei der ein in einer Tastbewegung gegen eine Wandung eines zu prüfenden Behälters andrückbares Tastorgan und eine Meßeinrichtung zur Erfassung der Reaktionskraft der Wandung des bei der Tastbewegung verformten Behälters als Maß für den Gasdruck vorgesehen ist. Eine bevorzugte Lösungsvariante der Erfindung sieht eine unter Vorschub gegen einen zu prüfenden Behälter bewegbare Abtasteinheit, ein an der Abtasteinheit über eine Druckfeder abgestütztes, mit seinem in Vorschubrichtung weisenden freien Tastende gegen eine Wandung des Behälters andrückbares Tastorgan und eine Meßeinrichtung zur Erfassung der Vorschubposition des Tastorgans vor. Zur Bestimmung der Vorschubposition des Tastorgans kann die Meßeinrichtung einen vorzugsweise berührungslos arbeitenden Weg- oder Abstandssensor aufweist. Vorteilhafterweise ist der Abstandssensor als ortsfest angeordneter Laserabtastsensor ausgebildet, dessen Laserstrahl gegen eine Referenzfläche des Tastorgans in Vorschubrichtung ausgerichtet ist.

Zur einfachen Erzeugung der Tastbewegung weist die Abtasteinheit ein in einer Schubführung geführtes Vorschubelement auf, wobei das Tastorgan an dem Vörschubelement gegen die Rückstellkraft der Druckfeder begrenzt verschiebbar gelagert ist. Eine konstruktiv einfache Ausgestaltung sieht hierbei vor, daß das Vorschubelement durch eine in einem Führungsrohr senkrecht zur Förderstrecke geführte Schubstange gebildet ist, an deren freiem Ende eine Führungsbuchse angeordnet ist, und daß das Tastorgan als Taststößel ausgebildet ist, der in der Führungsbuchse gelagert ist und mit einem freien Stirnende in Vorschubrichtung über die Schubstange übersteht

Eine Abtastung im Durchlauf der Behälter läßt sich dadurch realisieren, daß ein Abtastförderer zur synchronen Bewegung der Abtasteinheit mit einem zu prüfenden Behälter längs eines Abschnitts der Förderstrecke vorgesehen ist. Um eine zuverlässige Abtastung auch bei hohem Durchsatz der Förderstrecke mit einfachen Mitteln sicherzustellen, ist der Abtastförderer vorteilhafterweise als in der Transportgeschwindigkeit der Behälter umlaufender Endlosförderer ausgebildet, wobei eine Vielzahl von Abtasteinheiten über die Umlaufstrecke des Abtastförderers verteilt im Abstand voneinander angeordnet sind. In einer baulich einfachen Ausführung ist es vorgesehen, daß der Abtastförderer zwei parallel zueinander über Kettenräder umlaufende Rollenketten aufweist, und daß die seitlich nebeneinander angeordneten Führungsrohre der Abtasteinheiten an den Kettengliedern der Rollenketten befestigt und dabei senkrecht zu deren Umlaufebene ausgerichtet sind.

Eine definiertes Abtasten der in Bewegung befindlichen Behälter kann mit geringem Aufwand dadurch verwirklicht werden, daß ein Vorschubmechanismus zur selbsttätigen Erzeugung der Vorschubbewegung der Abtasteinheiten im Zuge von deren Transport in dem Abtastförderer vorgesehen ist. Um hierbei den Bewegungsablauf mit hoher Vorschubgenauigkeit festzulegen, kann der Vorschubmechanismus eine längs der Förderstrecke verlaufende, mit ihrer Führungsbahn einen Vorschub der Abtasteinheiten quer zur Förderstrecke vorgebende Führungskulisse aufweisen, mit der ein an den Abtasteinheiten angeordnetes Eingriffsglied beim Transport in dem Abtastförderer selbsttätig in Eingriff kommt. Dabei ist es auch im Hinblick auf eine hohe Lebensdauer und Reduzierung von Reibungsverlusten günstig, wenn das Eingriffsglied durch eine mit der Schubstange der Abtasteinheiten verschiebefest verbundene Laufrolle gebildet ist, die in einer Führungsbahn der Führungskulisse geführt ist.

Um Lageunterschiede der abzutastenden Behälterwandung auszugleichen, ist ein Zustellmechanismus zur Erzeugung einer Zustellbewegung vorgesehen, bei der das Tastorgan mit seinem freien Ende in Anlage mit der Wandung eines zu prüfenden Behälters bringbar ist. Eine einfach realisierbare Ausführung sieht dabei vor, daß die Führungskulisse an einem auslaufseitigen Abschnitt eine Rückstellkontur für einen Rückhub der Abtasteinheiten aufweist, und daß beim Durchlauf der Abtasteinheiten durch die Rückstellkontur eine die Zustellbewegung erzeugende Zustellfeder des Zustellmechanismus unter Vorspannung setzbar ist. Der automatische Ablauf der Zustellbewegung läßt sich dadurch erreichen, daß die Zustellfeder nach dem Durchlauf der Abtasteinheiten durch die Führungskulisse mittels eines Rastgesperres selbsttätig unter Vorspannung gehalten ist, und daß der Sperrer des Rastgesperres an einer Auslösestelle im einlaufseitigen Bereich der Führungskulisse entriegelbar ist.

Um eine einfache Umstellung auf unterschiedliche Behälterabmessungen zur Erzielung einer optimalen Abtastung zu ermöglichen, ist es von Vorteil, wenn die Abtasteinheiten höhenverstellbar und/oder seitenverstellbar seitlich an der Förderstrecke angeordnet sind.

Definierte Abtastbedingungen lassen sich durch einen Abstützförderer sicherstellen, welcher eine die Behälter gegen die Tastbewegung des Tastorgans abstützenden Widerlagerfläche gleichlaufend mit den Behältern mitbewegt. Um eine hohe Andruckbelastung bei geringer Reibung aufnehmen zu können, ist es von Vorteil, wenn die Widerlagerfläche durch ein dem Tastorgan zugewandtes Trum eines in dem Abstützförderer umlaufenden Plattenbandes gebildet ist, und wenn die Platten des Plattenbandes endseitig an umlaufenden Rollenketten befestigt sind, die in Gleitschienen geführt sind.

Im folgenden wird die Erfindung anhand eines in der Zeichnung in schematischer Weise dargestellten Ausführungsbeispiels näher erläutert. Es zeigen
- Fig. 1: eine Vorrichtung zur Dichtheitsprüfung von in einer Förderstrecke transportierten Getränkeflaschen in einer Stirnseitenansicht in Richtung der Förderstrecke;
- Fig. 2: eine Draufsicht auf die Prüfvorrichtung nach Fig. 1;
- Fig. 3: einen Abtastapparat der Prüfvorrichtung in einer Fig. 1 entsprechenden vergrößerten Darstellung;

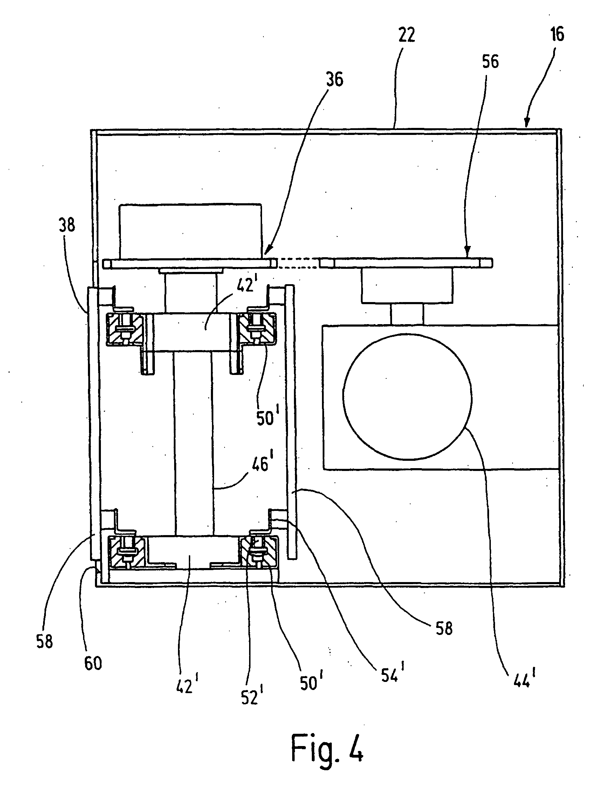

- Fig. 4: einen Abstützapparat der Prüfvorrichtung in einer Fig. 1 entsprechenden vergrößerten Darstellung;
- Fig. 5: bis 7 eine Abtasteinheit des Abtastapparats in verschiedenen Abtastpositionen in einer Seitenansicht; und
- Fig. 8: einen Abtastkopf der Abtasteinheit nach Fig. 5 bis 7 in einer vergrößerten, geschnittenen Darstellung.

Die in der Zeichnung dargestellte Vorrichtung zur Dichtheitsprüfung von Getränkeflaschen ist an einer Prüfstation einer Förderstrecke 10 installiert, in der aus Kunststoff bestehende, verformbare Getränkeflaschen 12 stehend auf einem Förderband 14 transportiert werden. Die Getränkeflaschen 12 sind mit einer kohlensäurehaltigen Flüssigkeit befüllt und stehen daher bei dichtem Verschluß unter Gasüberdruck gegenüber der Atmosphäre. Das Meßprinzip der Prüfvorrichtung beruht auf der Erkenntnis, daß der Gasdruck die Formsteifigkeit der Flaschen 12 erhöht, so daß über eine Abtastverformung der Flaschen der Gasdruck und damit auch die Dichtheit der Flaschen überprüfbar ist.

Die Prüfvorrichtung besteht im wesentlichen aus einem seitlich an der Förderstrecke 10 angeordneten Abtastapparat 16 und einem dem Abtastapparat gegenüberstehenden Abstützapparat 18. Der Abtastapparat 16 enthält in einem auf höhenverstellbaren Gerätefüßen 20 stehenden Gehäuse 22 eine Vielzahl von Abtasteinheiten 24, die in einem Abtastförderer 26 längs eines Abschnitts 28 der Förderstrecke umlaufend bewegbar und dabei mit den einzeln durchlaufenden Flaschen 12 mitführbar sind. Der Abstützapparat 18 steht auf einem höhenverstellbaren Gerätefuß 30 und ist an seinem Gehäuse 32 über einen Bügel 34 fest mit dem Gehäuse 22 des Abtastapparats 16 verbunden. In dem Gehäuse 32 ist ein im Umlauf arbeitender Abstützförderer 36 angeordnet, welcher zur seitlichen Abstützung der Flaschen 12 gegenüber dem Abtastapparat 16 eine Widerlagerfläche 38 längs des Förderstreckenabschnitts 28 mit den Flaschen 12 mitbewegt.

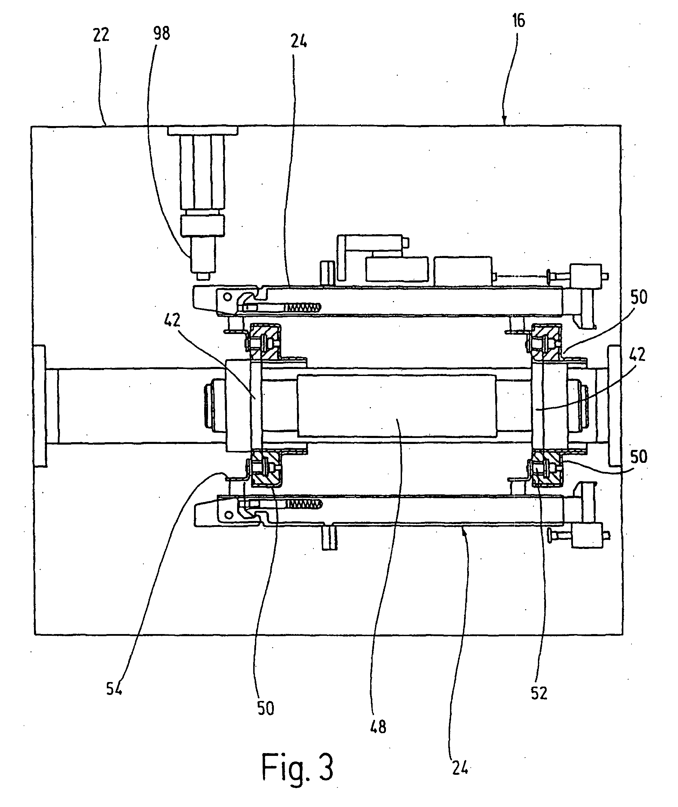

Der Abtastförderer 26 weist als doppelkettiger Endlosförderer zwei im Abstand voneinander angeordnete Rollenketten 40 auf, die über Kettenräder 42 einer über Motor 44 angetriebenen Antriebswelle 46 und einer Umlenkwelle 48 in der Fördergeschwindigkeit des Förderbandes 14 parallel zueinander in vertikalen Ebenen umlaufen. Wie insbesondere aus Fig. 3 ersichtlich, sind die Rollenketten 40 am oberen und unteren Trum in Gleitschienen 50 geführt, welche die Kettenglieder 52 der Rollenketten 40 senkrecht zur Umlaufrichtung abstützen. Zur Verbindung der Abtasteinheiten 24 mit den Rollenketten 40 sind Winkelstücke 54 vorgesehen, die an einem seitlich über die Gleitschienen 50 überstehenden Stirnende der Kettenglieder 52 befestigt sind.

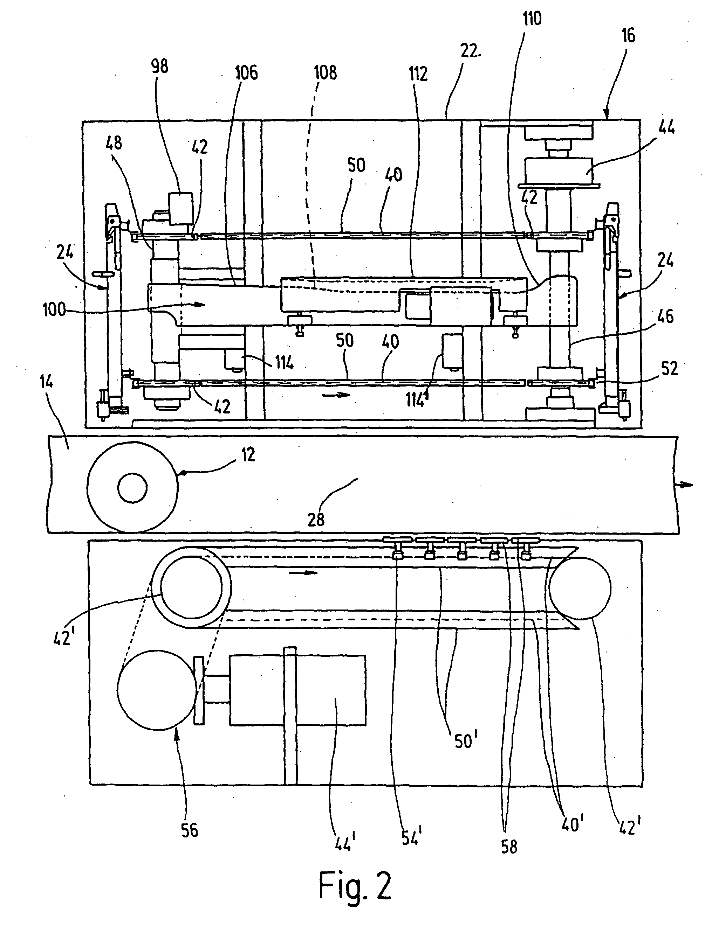

Der Abstützförderer 36 ist in gleicher Weise wie der Abtastförderer 26 als doppelkettiger Endloskettenförderer ausgebildet. Einander entsprechende Komponenten, auf deren vorstehende Erläuterung verwiesen wird, sind daher mit um einen Hochstrich (') ergänzten entsprechenden Bezugszeichen versehen. Im Unterschied zu dem Abtastförderer 26 laufen bei dem Abstützförderer 36 die Rollenketten 40' in horizontalen Ebenen um, wobei der Motor 44' über ein Kettengetriebe 56 mit der Welle 46' verbunden ist. An paarweise gleichlaufenden Kettengliedern 52' der Rollenketten 40' sind rechteckige Plattenteile 58 befestigt, die, wie in Fig. 2 beispielhaft für einige Plattenteile dargestellt, seitlich aneinander angrenzen. Die Plattenteile 58 ergänzen sich auf diese Weise zu einem senkrecht zu den Umlaufebenen der Rollenketten 40' sich erstreckenden umlaufenden Plattenband, dessen dem Abtastapparat 16 zugewandte, über ein Fenster 60 des Gehäuses 33 überstehende Seite die mit der Fördergeschwindigkeit bewegte Widerlagerfläche 38 für die Flaschen 12 bildet.

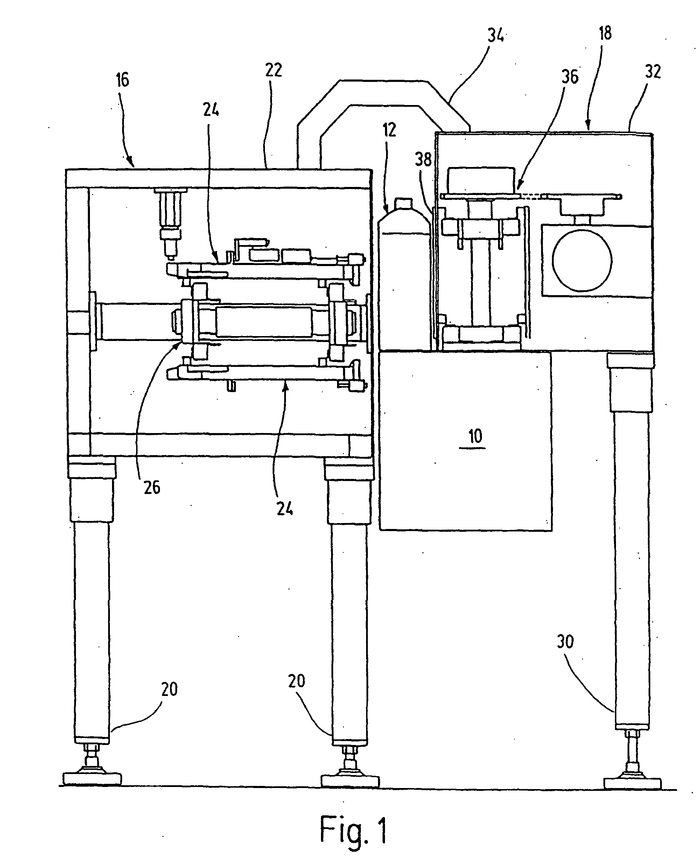

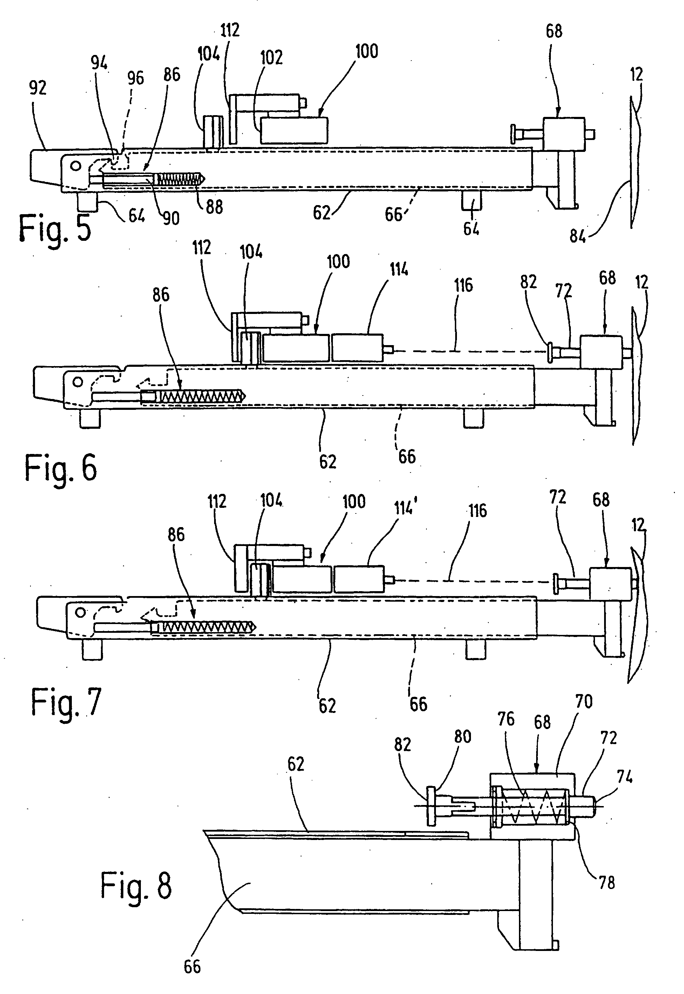

Die Abstasteinheiten 24 sind -.in Fig. 1 bis 3 nur beispielhaft gezeigt - ebenfalls in seitlich nebeneinander liegender Anordnung über die Umlaufstrecke des Abtastförderers 26 verteilt angeordnet. Wie insbesondere aus Fig. 5 bis 8 ersichtlich, weisen die Abtasteinheiten 24 ein durch ein rechteckiges Hohlprofil gebildetes Führungsrohr 62 auf, das an seinen Endabschnitten über mantelseitig abstehende Verbindungsstücke 64 starr mit den Winkelstücken 54 der Kettenglieder 52 verbindbar ist. In dem Führungsrohr 62 ist eine Schubstange 66 axial verschiebbar geführt, an deren aus dem Führungsrohr 62 ragendem Ende ein Tastkopf 68 angeordnet ist. Der in Fig. 8 näher gezeigte Tastkopf 68 umfaßt eine Führungsbuchse 70, in der ein Taststößel 72 gelagert ist. Der Taststößel 72 ist dabei in Vorschubrichtung der Schubstange 66 ausgerichtet und steht mit seinem freien Tastende 74 über die Führungsbuchse 70 über. Eine in der Führungsbuchse 70 mantelseitig auf dem Taststößel 72 angeordnete Druckfeder 76 ist an ihren Federenden unter Vorspannung an einem Anschlagbund 78 des Taststößels 72 und an der Führungsbuchse 70 abgestützt, so daß der Taststößel 72 entgegen der Federrückstellkraft mit seinem freien Tastende 74 gegen die Stirnseite der Führungsbuchse 70 verschiebbar ist. An seinem von dem Tastende 74 abgewandten rückseitigen Ende weist der Taststößel 72 eine Stirnscheibe 80 auf, die mit ihrer freien Stirnseite eine Referenzfläche 82 für eine Positionsbestimmung bildet.

Um den Taststößel 72 an seinem freien Ende 74 mit der Seitenwandung 84 einer zu prüfenden Flasche 12 in Anlage zu bringen, weisen die Abtasteinheiten 24 einen Zustellmechanismus 86 auf. Dieser umfaßt eine als Schraubenfeder ausgebildete Zustellfeder 88, die im führungsrohrseitigen Endabschnitt der Schubstange 66 angeordnet und über einen Druckstift 90 an einem an dem Führungsrohr 62 drehbar gelagerten Riegel 92 abgestützt ist. Der Riegel 92 ist mit einer Rastklinke 94 versehen, die im vollständig eingeschobenen Zustand der Schubstange 66 in eine Rastausnehmung 96 der Schubstange 66 einrastet und die Zustellfeder 88 unter Vorspannung sichert. Zur Auslösung des Riegels 92 aus seiner Raststellung ist an einer Auslösestelle am Beginn des oberen Umlaufstreckenabschnitts des Abtastförderers 26 ein pneumatisch betätigbarer Auslösezylinder 98 an dem Gehäuse 22 angeordnet. Beim Auslösen des Riegels 92 wird die Zustellfeder 88 unter Vorschub der Schubstange 66 entspannt, wobei die Schubstange 66 mit ihrem Tastkopf 68 durch ein nicht gezeigtes Fenster des Gehäuses 22 hindurch seitlich in den Förderstreckenabschnitt 28 eingreift. Die Federkonstante und der Hub der Zustellfeder 88 sind dabei so bemessen, daß der Tastkopf 68 mit einer Flasche 12 in Anlage gelangen kann, ohne diese nennenswert zu verformen.

Zur Ausführung des eigentlichen Tasthubs des Abtastkopfs 68 ist ein Vorschubmechanismus vorgesehen, der eine Führungskulisse 100 umfaßt, mit deren Führungsbahn 102 an den Abtasteinheiten 24 angeordnete Laufrollen 104 im Zuge des Umlaufs in dem Abtastförderer 26 in Eingriff gelangen. Die Führungskulisse 100 erstreckt sich längs des oberen Umlaufstreckenabschnitts des Abtastförderers 26 und definiert durch die Kontur ihrer Führungsbahn 102 den Verlauf eines Tasthubes der Abtasteinheiten 24. Hierzu weist die Führungsbahn 102 in Umlaufrichtung gesehen einen Anlaufbereich 106, einen Vorschubbereich 108 und einen Rückstellbereich 110 auf (Fig. 2). Zwischen dem Anlaufbereich 106 und dem Rückstellbereich 110 sichert eine Sicherungsschiene 112 die Laufrollen 104 gegen ein Abheben von der Führungsbahn 102. Die Laufrolle 104 der Abtasteinheiten ist über ein durch einen Axialschlitz des Führungsrohrs 62 hindurchgreifendes Verbindungsmittel mit der Schubstange 66 starr verbunden.

Um die Änderung der Vorschubposition des Taststößels 72 beim Tasthub feststellen zu können, sind zwei Abstandssensoren 114, 114' vorgesehen, die vor und nach dem Vorschubbereich 108 der Führungskulisse 100 gehäusefest angeordnet sind. Die Abstandssensoren sind als Lasermeßeinheiten ausgebildet, deren Lichtstrahl 116 in Vorschubrichtung gegen die Referenzfläche 82 des Taststößels 72 ausgerichtet ist.

Im folgenden wird die Arbeitsweise der Prüfvorrichtung beschrieben. Das Meßprinzip beruht darauf, daß der Taststößel 72 beim Tasthub in einer Tastbewegung gegen die Seitenwandung 84 einer zu prüfenden Flasche 12 gedrückt wird, und daß die Reaktionskraft der dabei eingedrückten Wandung über die Positionsänderung des Taststößels 72 als zumindest qualitatives Maß für den Gasdruck mittelbar erfaßt wird, wobei bei fehlendem Gasdruck eine Flasche 12 als undicht erkannt wird. Um die Flaschen 12 im Durchlauf durch den Förderstreckenabschnitt 28 der Prüfstation und ohne Positionsdetektion prüfen zu können, wird bei allen Abtasteinheiten 24 der Zustellmechanismus 86 an der Auslösestelle ausgelöst. Da der seitliche Abstand der Abtasteinheiten 24 kleiner als der Flaschendurchmesser ist, kommt bei jeder in den Förderstreckenabschnitt 28 einlaufenden Flasche 12 mindestens ein Abtastkopf 68 im Zuge der Zustellbewegung mit der zugewandten Seitenwandung 84 in Anlage (Fig. 6). Die Federkraft der Zustellfeder 86 reicht dabei aus, um die Flasche 12 gegen die gegenüberliegende Widerlagerfläche 38 zu drücken, so daß Unterschiede in der Lateralposition der Flaschen auf dem Förderband 14 ausgeglichen werden und die Flaschen 12 für den nachfolgenden Tasthub in definierter Lage abgestützt sind. Es versteht sich dabei, daß die Federkonstante der Druckfeder 76 so bemessen ist, daß der Taststößel 72 bei der Zustellbewegung nicht wesentlich gegenüber der Führungsbüchse 70 verschoben wird. In der Anlagestellung wird dann beim Durchgang des Taststößels 72 durch den Laserstrahl des vorgeordneten ersten Abstandssensors 114 die Ausgangsposition der Referenzfläche 82 in Vorschubrichtung erfaßt. Im weiteren Verlauf der Umlaufbewegung der betreffenden Abtasteinheit 24 gelangt die Laufrolle 104 in den Vorschubbereich 108 der Führungskulisse 100 und bewegt den Tastkopf um einen definierten Tasthub gegen die Flasche 12 weiter. In Abhängigkeit von dem in ihr herrschenden Gasdruck setzt die Flasche 12 der durch den Vorschub bewirkten Tastbewegung des Taststößels 72 einen mehr oder weniger großen Widerstand entgegen, so daß der Taststößel mehr oder weniger weit in die Führungsbuchse 70 zurückgedrängt wird. Eine große Längenänderung der Zugfeder 76 infolge eines geringen Verformungswegs beziehungsweise einer hohen Reaktionskraft der Wandung 84 spiegelt damit einen hohen Gasdruck in der Flasche 12 wieder. Die Längenänderung der Druckfeder 76 wird über die Positionsänderung des Stößels 72 bestimmt, indem die Endposition der Referenzfläche 82 durch den zweiten Abstandssensor 114' am Ende des Tasthubs gemessen wird. Nach der Ausführung des Tasthubs wird die Schubstange 66 beim Durchgang der Abtasteinheiten 24 durch den Rückstellbereich 110 der Führungskulisse wieder in ihre Ausgangsposition (Fig. 5) verschoben, wobei die Zustellfeder 88 selbsttätig vorgespannt wird. Anschließen gelangen die Abtasteinheiten 24 über die Umlenkräder 42 an der Welle 46 in den unteren Abschnitt der Umlaufstrecke und werden dort wieder an den Anfang des Förderstrekkenabschnitts 28 transportiert.

Zusammenfassend ist folgendes festzuhalten: Die Erfindung betrifft ein Verfahren und eine Vorrichtung zur Dichtheitsprüfung von in einer Förderstrecke 10 im Durchlauf durch eine Prüfstation transportierten, unter Gasdruck stehenden verformbaren Behältern 12. Zur mindestens qualitativen Erfassung des Gasdrucks über die damit korrelierte Formsteifigkeit der Behälter ist ein Tastorgan 72 durch Vorschub einer Abtasteinheit 24 in einer linearen Tastbewegung gegen eine Wandung 84 eines zu prüfenden Behälters 12 andrückbar, wobei das Tastorgan 72 über eine Druckfeder 76 an der Abtasteinheit 24 abgestützt ist und der Behälter 12 bei der Tastbewegung verformt wird. Die Positionsänderung des Tastorgans 72 bei der Tastbewegung wird dann als Maß für den Gasdruck erfaßt.

## Patentansprüche

1. Verfahren zur Dichtheitsprüfung von in einer Förderstrekke (10) im Durchlauf durch eine Prüfstation transportierten, unter Gasdruck stehenden verformbaren Behältern (12), bei welchem ein Tastorgan (72) in einer Tastbewegung gegen eine Wandung (84) eines zu prüfenden Behälters (12) gedrückt wird und der Behälter (12) bei der Tastbewegung verformt wird, **dadurch gekennzeichnet, daß** das Tastorgan (72). unter vorgegebenem Vorschub einer Abtasteinheit (24) gegen die Wandung (84) gedrückt wird, wobei das Tastorgan (72) über eine Druckfeder (76) an der Abtasteinheit (24) abgestützt ist, und daß die Positionsänderung des Tastorgans (72) durch eine berührungslose Weg- oder Abstandsmessung am Ende der Tastbewegung als Maß für den Gasdruck erfaßt wird.

2. Verfahren nach Anspruch 1, **dadurch gekennzeichnet, daß** das Tastorgan (72) mit seinem freien Tastende (74) vor dem Ausführen der Tastbewegung in einer Zustellbewegung der Abtasteinheit (24) mit der Wandung (84) des zu prüfenden Behälters (12) in Anlage gebracht wird.

3. Verfahren nach Anspruch 1 oder 2, **dadurch gekennzeichnet, daß** die Positionsänderung des Tastorgans (72) durch eine Differenzmessung des Abstandes des Tastorgans (72) zu einer ortsfesten Meßstelle am Anfang und Ende der Tastbewegung erfaßt wird.

4. Verfahren nach einem der Ansprüche 1 bis 3, **dadurch gekennzeichnet, daß** die Abtasteinheit (24) beim Abtastvorgang in der Transportgeschwindigkeit der zu prüfenden Behälter (12) längs der Förderstrecke (10) bewegt wird.

5. Verfahren nach Anspruch 4, **dadurch gekennzeichnet, daß** die Tastbewegung quer zur Transportrichtung des zu prüfenden Behälters (12) ausgeführt wird.

6. Verfahren nach einem der Ansprüche 1 bis 5, **dadurch gekennzeichnet, daß** der zu prüfende Behälter (12) an seiner von dem Tastorgan (72) abgewandten Seite in Anlage an eine vorzugsweise mit dem Behälter (12) mitbewegte Widerlagerfläche (38) gebracht wird.

7. Verfahren nach einem der Ansprüche 1 bis 6, **dadurch gekennzeichnet, daß** eine Vielzahl von Abtasteinheiten (24) im Umlauf längs eines Abschnitts (28) der Förderstrecke (10) in Fördergeschwindigkeit mitbewegt werden, und daß der Vorschub der Abtasteinheiten (24) quer zur Förderrichtung an einer Auslösestelle des Förderstreckenabschnitts (28) unabhängig von dem Vorhandensein eines zu prüfenden Behälters (12) ausgelöst wird.

8. Vorrichtung zur Dichtheitsprüfung von in einer Förderstrecke (10) im Durchlauf durch eine Prüfstation transportierten, unter Gasdruck stehenden verformbaren Behältern (12), mit einem in einer Vorschubbewegung mit seinem freien Tastende (74) gegen eine Wandung (84) eines zu prüfenden Behälters (12) andrückbaren Tastorgan (72) und einer Meßeinrichtung (114,114') zur Erfassung der Vorschubposition des Tastorgans (72), **dadurch gekennzeichnet, daß** das Tastorgan über eine Druckfeder (76) an einer unter Vorschub gegen den Behälter (12) bewegbaren Abtasteinheit (24) abgestützt ist, und daß die Meßeinrichtung einen berührungslos arbeitenden Weg- oder Abstandssensor (114,114') zur Bestimmung der Vorschubposition des Tastorgans (72) als Maß für den Gasdruck aufweist.

9. Vorrichtung nach Anspruch 8, **dadurch gekennzeichnet, daß** der Abstandssensor als ortsfest angeordneter Laserabtastsensor (114,114') ausgebildet ist, dessen Laserstrahl gegen eine Referenzfläche (82) des Tastorgans (72) in Vorschubrichtung ausgerichtet ist.

10. Vorrichtung nach Anspruch 8 oder 9, **dadurch gekennzeichnet, daß** die Abtasteinheit (24) ein in einer Schubführung (62) geführtes Vorschubelement (66) aufweist, und daß das Tastorgan (72) an dem Vorschubelement (66) gegen die Rückstellkraft der Druckfeder (76) begrenzt verschiebbar gelagert ist.

11. Vorrichtung nach Anspruch 10, **dadurch gekennzeichnet, daß** das Vorschubelement durch eine in einem Führungsrohr senkrecht zur Förderstrecke (10) geführte Schubstange (66) gebildet ist, an deren freiem Ende eine Führungsbuchse (70) angeordnet ist, und daß das Tastorgan als Taststößel (72) ausgebildet ist, der in der Führungsbuchse (70) gelagert ist und mit einem freien Stirnende (74) in Vorschubrichtung über die Schubstange (66) übersteht

12. Vorrichtung nach einem der Ansprüche 8 bis 11, **gekennzeichnet durch** einen Abtastförderer (26) zur synchronen Bewegung der Abtasteinheit (24) mit einem zu prüfenden Behälter (12) längs eines Abschnitts (28) der Förderstrecke (10).

13. Vorrichtung nach Anspruch 12, **dadurch gekennzeichnet, daß** der Abtastförderer (26) als in der Transportgeschwindigkeit der Behälter (12) umlaufender Endlosförderer ausgebildet ist, und daß eine Vielzahl von Abtasteinheiten (24) über die Umlaufstrecke des Abtastförderers (26) verteilt im Abstand voneinander angeordnet sind.

14. Vorrichtung nach Anspruch 12 oder 13, **dadurch gekennzeichnet, daß** der Abtastförderer (26) zwei parallel zueinander über Kettenräder (42) umlaufende Rollenketten (40) aufweist, und daß die seitlich nebeneinander angeordneten Führungsrohre (62) der Abtasteinheiten (24) an den Kettengliedern (52) der Rollenketten (40) befestigt und dabei senkrecht zu deren Umlaufebene ausgerichtet sind.

15. Vorrichtung nach einem der Ansprüche 12 bis 14, **gekennzeichnet durch** einen Vorschubmechanismus (100,104) zur selbsttätigen Erzeugung der Vorschubbewegung der Abtasteinheiten (24) im Zuge von deren Transport in dem Abtastförderer (26).

16. Vorrichtung nach Anspruch 15, **dadurch gekennzeichnet, daß** der Vorschubmechanismus (100,104) eine längs der Förderstrecke (10). verlaufende, mit ihrer Führungsbahn (102) einen Vorschub der Abtasteinheiten (24) quer zur Förderstrecke (10) vorgebende Führungskulisse (100) aufweist, mit der ein an den Abtasteinheiten (24) angeordnetes Eingriffsglied (104) beim Transport in dem Abtastförderer (26) selbsttätig in Eingriff kommt.

17. Vorrichtung nach Anspruch 16, **dadurch gekennzeichnet, daß** das Eingriffsglied durch eine mit der Schubstange der Abtasteinheiten (24) verschiebefest verbundene Laufrolle (104) gebildet ist, die in der Führungsbahn (102) der Führungskulisse (100) geführt ist.

18. Vorrichtung nach einem der Ansprüche 8 bis 17, **gekennzeichnet durch** einen Zustellmechanismus (86) zur Erzeugung einer Zustellbewegung, bei der das Tastorgan (72) mit seinem freien Ende (74) in Anlage mit der Wandung (84) eines zu prüfenden Behälters (12) bringbar ist.

19. Vorrichtung nach Anspruch 18, **dadurch gekennzeichnet, daß** die Führungskulisse (100) an einem auslaufseitigen Abschnitt (110) eine Rückstellkontur für einen Rückhub der Abtasteinheiten (24) aufweist, und daß beim Durchlauf der Abtasteinheiten (24) durch die Rückstellkontur eine die Zustellbewegung erzeugende Zustellfeder (88) des Zustellmechanismus (86) unter Vorspannung setzbar ist.

20. Vorrichtung nach Anspruch 19, **dadurch gekennzeichnet, daß** die Zustellfeder (88) nach dem Durchlauf der Abtasteinheiten (24) durch die Führungskulisse (100) mittels eines Rastgesperres (92,96) selbsttätig unter Vorspannung gehalten ist, und daß der Sperrer (92) des Rastgesperres an einer Auslösestelle im einlaufseitigen Bereich (106) der Führungskulisse (100) entriegelbar ist.

21. Vorrichtung nach einem der Ansprüche 8 bis 20, **dadurch gekennzeichnet, daß** die Abtasteinheiten (24) höhenverstellbar und/oder seitenverstellbar an der Förderstrecke (10) angeordnet sind.

22. Vorrichtung nach einem der Ansprüche 8 bis 21, **gekenn-zeichnet durch** einen Abstützförderer (36) zum Transport einer mit einem zu prüfenden Behälter (12) mitbewegten und diesen gegen die Tastbewegung des Tastorgans (72) abstützenden Widerlagerfläche (38).

23. Vorrichtung nach Anspruch 22, **dadurch gekennzeichnet, daß** die Widerlagerfläche (38) durch ein dem Tastorgan (72) zugewandtes Trum eines in dem Abstützförderer (36) umlaufenden Plattenbandes gebildet ist, und daß die Platten (58) des Plattenbandes endseitig an umlaufenden Rollenketten (40') befestigt sind, die in Gleitschienen (50') geführt sind.

## Claims

1. Process for testing the tightness of deformable containers under gas pressure while being transported through a test station along a conveyor path (10), wherein a feeler (72) is pressed in a probe movement against the wall (84) of a container (12) to be tested and the container (12) is deformed during the probe movement, thereby **characterized, that** a sensor unit (24) presses the feeler (72) against the wall (84) of the container with a predetermined forward feed, and that the feeler (72) is supported in the sensor unit (24) via a pressure spring (76), and that the change in position of the feeler (72) at the end of the probe movement is detected by a contactless displacement or distance measurement device as a value indicating the gas pressure.

2. Process according to Claim 1, thereby **characterized, that** the free end (74) of the feeler (72) is brought into contact with the wall (84) of the container to be tested in an infeed movement of the sensor unit (24) prior to the carrying out of the probe movement.

3. Process according to one of Claims 1 or 2, thereby **characterized, that** the positional change of the feeler (72) is determined by measurement of the differential of the position of the feeler (72) with respect to a positionally fixed measurement point at the beginning and the end of the probe movement.

4. Process according to one of Claims 1 to 3, thereby **characterized, that** the sensor unit (24) during the probe movement is moved along the conveyor path (10) at the transport speed of the bottle (12) to be tested.

5. Process according to Claim 4, thereby **characterized, that** the test movement is carried out perpendicular to the transport direction of the bottle (12) to be tested.

6. Process according to one of Claims 1 to 5, thereby **characterized, that** the container (12) to be tested, on its side opposite to the feeler (72), is brought into contact with a bracing surface (38), preferably movable along with the container (12).

7. Process according to one of Claims 1 to 6, thereby **characterized, that** a plurality of sensor units (24) revolve along one segment (28) of the conveyor path (10) and are moved along at the conveyor speed, and that the thrust of the sensor units (24) occurs perpendicularly to the conveyance direction and starts at a start point of the conveyor path section (28) independent of the presence of a container (12) to be tested.

8. Device for testing tightness of deformable containers (12) under gas pressure while passing through a test station along a conveyor path (10), with a feeler (72) which during a probe movement can be pressed with it's free end (74) against a wall (84) of a container (12) to be tested, and a measuring device (114, 114') for determining the feed position of the feeler (72), thereby **characterized, that** the feeler is supported via a pressure spring (76) on a sensor unit (24) movable under forward feed against the container (12), and that the measuring device (114, 114') is a contactless measuring device for determining the feed position of the feeler (72) as a measure of the gas pressure.

9. Device according to Claim 8, thereby **characterized, that** the distance sensor is provided as a positionally fixed laser sensor (114, 114'), of which the laser beam is directed in the thrust direction against a reference surface (82) of the feeler (72).

10. Device according to one of Claims 8 or 9, thereby **characterized, that** the sensor unit (24) includes a feed element (66) guided in a displacement guide (62), and that the feeler (72) is mounted limitedly displaceable on the push rod (66) against the return force of the pressure spring (76).

11. Device according to Claim 10, thereby **characterized, that** the thrust element is comprised of a push rod (66) guided in a guide tube perpendicular to the conveyor path (10), on the free end of which a guide bushing (70) is provided, and that the sensor unit comprises a feeler (72), which is mounted in the guide bushing (70) and which with its free end face (74) projects over the push rod (66) in the direction of feed.

12. Device according to one of Claims 8 to 11, **characterized by** a sensor conveyor (26) for synchronizing movement of the sensor units (24) with the container (12) to be tested along a segment (28) of the conveyor path (10).

13. Device according to Claim 12, thereby **characterized, that** the sensor conveyor (26) is constructed as an endless conveyor belt revolving at the transport speed of the containers (12), and that a plurality of sensor units (24) are provided over the circuit path of the sensor conveyor (26) distributed spaced apart from each other.

14. Device according to Claim 12 or 13, thereby **characterized, that** the sensor conveyor (26) is comprised of two roller chains (40) revolving parallel to each other over chain sprockets (42) and that the guide tubes (62) of the sensor units (24) provided sideways next to each other are connected to the chain links (52) of the roller chain (40) and thereby are oriented perpendicularly to the circumference plane.

15. Device according to one of Claims 12 to 14, **characterized by** a mechanism (100, 104) for independent generation of the movement for the sensor unit (24) in the course of the transport thereof in the sensor conveyor (26).

16. Device according to Claim 15, thereby **characterized, that** the mechanism (100, 104) includes a guide stop (100) running with its guide track (102) along the conveyor path (10) which determines the of the sensor units (24) perpendicular to the conveyor path (10), with which an engagement element (104) provided on the sensor unit (24) comes automatically into engagement during transport in the probe conveyor (26).

17. Device according to Claim 16, thereby **characterized, that** the engagement element is formed by a tread roll (104) connected fixed against displacement with the push rod of the sensor unit (24), which is guided in the guide track (102) of the guide stop (100).

18. Device according to one of Claims 8 to 17,
**characterized by** an infeed mechanism (86) for production of an infeed movement, via which the free end (74) of the feeler (72) can be brought into contact with the wall (84) of the container (12) to be tested.

19. Device according to Claim 18, thereby **characterized, that** the guide stop (100) in a run-out segment (110) exhibits a return contour for a return stroke of the sensor unit (24), and that during a passing through of the sensor unit (24) an infeed spring (88) for producing the infeed movement of the infeed mechanism (86) is brought under pretension via the return contour.

20. Device according to Claim 19, thereby **characterized, that** the infeed spring (88) is automatically maintained under pretention by means of a catch lock (92, 96) after a run-through of the sensor units (24) past the guide stop (100), and that the locker (92) of the catch lock is unlockable at a release point at the infeed area (106) of the guide stop (100).

21. Device according to one of Claims 8 to 20, thereby **characterized, that** the sensor units (24) are provided on the conveyor path (10) adjustable in height and/or sideways.

22. Device according to one of Claims 8 to 21,
**characterized by** a brace conveyor (36) for transporting a bracing surface (38) along with the containers (12) to be tested and to brace these against the probe movement of the feeler (72).

23. Device according to Claim 22, thereby **characterized, that** the brace surface (38) is formed by a feeler (72) facing strand side of a continuously revolving plate conveyor in the support conveyor (36), and that the plates (58) of the plate conveyor are connected at their ends to revolving roller chains (40'), which are guided in glide tracks (50').

## Revendications

1. Procédé pour contrôler l'étanchéité de conteneurs (12) et déformables sous une pression de gaz et transportés en continu dans une voie de transport (10) en traversant une station de contrôle, dans le cas duquel un organe palpeur (72) est pressé contre une paroi (84) d'un conteneur à contrôler dans un mouvement de palpation, et le conteneur (12) est déformé lors du mouvement de palpation, **caractérisé en ce que** l'organe palpeur (72) est pressé contre la paroi (84) sous l'effet de l'avance prédéfinie d'une unité de palpation (24), l'organe palpeur (72) étant maintenu contre l'unité de palpation (24) par un ressort de pression (76), et **en ce que** la modification de position de l'organe palpeur (72) est enregistrée par une mesure de trajectoire ou de distance sans contact à la fin du mouvement de palpation comme mesure pour la pression de gaz.

2. Procédé selon la revendication 1, **caractérisé en ce que** l'organe palpeur (72) est appliqué, avec son extrémité palpeuse (74) libre, avant l'exécution du mouvement de palpation, dans un mouvement d'avance de l'unité de palpation (24) contre la paroi (84) du conteneur (12) à contrôler.

3. Procédé selon la revendication 1 ou 2, **caractérisé en ce que** la modification de la position de l'organe palpeur (72) est enregistrée par une mesure différentielle de l'écart de l'organe palpeur (72) par rapport à un point de mesure fixe au début et à la fin du mouvement de palpation.

4. Procédé selon l'une des revendications 1 à 3, **caractérisé en ce que** l'unité de palpation (24) est déplacée lors du procédé de palpation à la vitesse de transport du conteneur (12) à contrôler le long de la voie de transport (10).

5. Procédé selon la revendication 4, **caractérisé en ce que** le mouvement de palpation est exécuté perpendiculairement au sens de transport du conteneur (12) à contrôler.

6. Procédé selon l'une des revendications 1 à 5, **caractérisé en ce que** le conteneur (12) à contrôler, sur son côté détourné de l'organe palpeur (72), est amené en application contre une surface de butée (38) déplacée de préférence avec le conteneur (12).

7. Procédé selon l'une des revendications 1 à 6, **caractérisé en ce que** de nombreuses unités de palpation (24) sont déplacées à la vitesse de transport pendant la circulation le long d'une section (28) de la voie de transport (10), **et en ce que** l'avance des unités de palpation (24) est déclenchée perpendiculairement au sens de transport à un point de déclenchement de la section de la voie de transport (28) indépendamment de la présence d'un conteneur (12) à contrôler.

8. Dispositif pour contrôler l'étanchéité de conteneurs (12) déformables sous une pression de gaz et transportés en continu dans une voie de transport (10) dans une station de contrôle, muni d'un organe palpeur (72) pouvant être pressé, dans un mouvement d'avance, avec son extrémité palpeuse libre (74) contre une paroi d'un conteneur (12) à contrôler, et d'un dispositif de mesure (114, 114') pour l'enregistrement de la position d'avance de l'organe palpeur (72), **caractérisé en ce que** l'organe palpeur est maintenu par un ressort à pression (76) contre une unité de palpation (24) déplaçable contre le conteneur (12) lors de l'avance, et **en ce que** le dispositif de mesure présente un capteur de trajectoire ou de distance (114, 114') fonctionnant sans contact pour déterminer la position d'avance de l'organe palpeur (72) comme mesure de la pression de gaz.

9. Dispositif selon la revendication 8, **caractérisé en ce que** le capteur d'écart est formé comme capteur à laser (114, 114') placé de manière stationnaire, dont le rayon laser est dirigé contre une surface de référence (82) de l'organe palpeur (72) dans le sens d'avancement.

10. Dispositif selon la revendication 8 ou 9, **caractérisé en ce que** l'unité de palpation (24) présente un élément d'avancement (66) inséré dans un guidage de poussée (62), et **en ce que** l'organe palpeur (72) est placé sur l'élément d'avancement (66) de façon déplaçable et limitée contre la force de rappel du ressort de pression (76).

11. Dispositif selon la revendication 10, **caractérisé en ce que** l'élément d'avancement est formé par une tige de poussée (66) insérée dans un tube de guidage perpendiculaire à la voie de transport (10), sur l'extrémité libre de laquelle tige est placée une douille de guidage (70), et **en ce que** l'organe palpeur est formé comme coulisseau palpeur (72) placé dans la douille de guidage (70) et qui dépasse de la tige de poussée (66) avec une extrémité frontale libre (74) dans le sens d'avancement.

12. Dispositif selon l'une des revendications 8 à 11, **caractérisé par** un convoyeur de détection (26) pour mouvement synchrone de l'unité de palpation (24) avec un conteneur (12) à contrôler le long d'une section (28) de la voie de transport (10).

13. Dispositif selon la revendication 12, **caractérisé en ce que** le convoyeur de détection (26) est formé comme transporteur sans fin circulant à la vitesse de transport du conteneur (12), et **en ce que** de nombreuses unités de palpation (24) sont placées sur la voie de circulation du convoyeur de détection (26) et réparties à intervalles les unes des autres.

14. Dispositif selon la revendication 12 ou 13, **caractérisé en ce que** le convoyeur de détection (26) présente deux chaînes à rouleaux (40) parallèles l'une à l'autre et circulant sur des roues à chaîne (42), et **en ce que** les tubes de guidage (62) des unités de palpation (24), placés latéralement l'un à côté de l'autre, sont fixés sur les maillons de chaînes (52) des chaînes à rouleaux (40) et orientés perpendiculairement à leur niveau de circulation.

15. Dispositif selon l'une des revendications 12 à 14, **caractérisé par** un mécanisme d'avancée (100, 104) pour la création automatique du mouvement d'avance des unités de palpation (24) au cours de leur transport dans le convoyeur de détection (26).

16. Dispositif selon la revendication 15, **caractérisé en ce que** le mécanisme d'avancée (100, 104) présente une coulisse de guidage (100) s'étendant le long de la voie de transport (10), prédéfinissant, avec sa voie de guidage (102), une avancée des unités de palpation (24) perpendiculaire à la voie de transport (10), avec laquelle coulisse un organe de prise (104) placé sur les unités de palpation (24) entre automatiquement en prise dans le convoyeur de détection (66) lors du transport.

17. Dispositif selon la revendication 16, **caractérisé en ce que** l'organe de prise est formé par une poulie (104) raccordée de manière non déplaçable à la tige de poussée des unités de palpation (24), guidée dans la voie de guidage (102) de la coulisse de guidage (100).

18. Dispositif selon l'une des revendications 8 à 17, **caractérisé par** un mécanisme d'avance (86) pour la création d'un mouvement d'avance, dans le cas duquel l'organe palpeur (72) peut être amené, avec son extrémité libre (74), en application contre la paroi (84) d'un conteneur (12) à contrôler.

19. Dispositif selon la revendication 18, **caractérisé en ce que** la coulisse de guidage (100) présente, sur une section (110) du côté sortie, un contour de rappel pour une course de retour des unités de palpation (24), et **en ce qu**'un ressort de positionnement (88) du mécanisme d'avance (86) créant le mouvement d'avance, peut être mise sous prétension lors du passage des unités de palpation (24) par le contour de rappel.

20. Dispositif selon la revendication 19, **caractérisé en ce que** le ressort de positionnement (88) est maintenu automatiquement sous prétension, après le passage des unités de palpation (24) dans la coulisse de guidage (100), au moyen d'un dispositif d'encliquetage à cran d'arrêt (92, 96), et **en ce que** le cran d'arrêt (92) du dispositif d'encliquetage à cran d'arrêt peut être débloqué à un endroit de déclenchement dans la partie du côté entrée (106) de la coulisse de guidage (100).

21. Dispositif selon l'une des revendications 8 à 20, **caractérisé en ce que** les unités de palpation (24) sont placées sur la voie de transport (10) de manière réglable en hauteur et/ou latéralement.

22. Dispositif selon l'une des revendications 8 à 21, **caractérisé par** un convoyeur de maintien (36) pour le transport d'une surface de butée (38) déplacée avec un conteneur (12) à contrôler et maintenant celui-ci contre le mouvement de palpation de l'organe palpeur (72).

23. Dispositif selon la revendication 22, **caractérisé en ce que** la surface de butée (38) est formée par un compartiment tourné vers l'organe palpeur (72) d'un convoyeur à plaques circulant en continu dans le convoyeur d'appui (36), et **en ce que** les plaques (58) du convoyeur à plaques sont fixées du côté terminal sur des chaînes à rouleaux (40') en circulation guidées dans des glissières (50').
